(19) Europäisches Patentamt
European Patent Office
Office européen des brevets

(11) **EP 3 430 079 B1**

(12) **EUROPEAN PATENT SPECIFICATION**

(45) Date of publication and mention
of the grant of the patent:
**04.06.2025 Bulletin 2025/23**

(51) International Patent Classification (IPC):
**C08L 23/12** *(2006.01)*

(52) Cooperative Patent Classification (CPC):
(C-Sets available)
**C08L 23/12;** C08L 2201/02; C08L 2203/204;
C08L 2207/02                                        (Cont.)

(21) Application number: **16754466.7**

(22) Date of filing: **11.08.2016**

(86) International application number:
**PCT/EP2016/069153**

(87) International publication number:
**WO 2017/157484 (21.09.2017 Gazette 2017/38)**

(54) **POLYPROPYLENE COMPOSITION COMPRISING FLAME RETARDANT**

POLYMERZUSAMMENSETZUNG MIT FLAMMHEMMER

COMPOSITION POLYMÈRE COMPRENANT UN RETARDATEUR DE FLAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.03.2016 EP 16160068**

(43) Date of publication of application:
**23.01.2019 Bulletin 2019/04**

(73) Proprietor: **Borealis AG**
**1020 Vienna (AT)**

(72) Inventors:
• **AARNIO-WINTERHOF, Minna**
**4203 Altenberg (AT)**
• **SANDHOLZER, Martina**
**4030 Linz (AT)**
• **SUNDHOLM, Tua**
**06100 Porvoo (FI)**
• **BERNREITNER, Klaus**
**4010 Linz (AT)**
• **GABRIEL, Herbert**
**4076 Marienkirchen (AT)**
• **WONKA, Mario**
**4212 Kefermarkt (AT)**

(74) Representative: **Maiwald GmbH**
**Elisenhof**
**Elisenstraße 3**
**80335 München (DE)**

(56) References cited:
WO-A1-2007/010318          WO-A1-2007/010318
WO-A1-2011/079457          WO-A1-2011/079457
WO-A1-2012/079243          WO-A1-2012/079243

(52) Cooperative Patent Classification (CPC): (Cont.)

C-Sets
**C08L 23/12, C08L 23/16**

**Description**

**Polypropylene composition comprising flame retardant**

The present invention relates to a polymer composition with flame retardant activity, to a use of the polymer composition for producing an article, to an article comprising the polymer composition, preferably to an article which comprises a layer element comprising at least one layer which comprises the polymer composition, preferably to an article which is a photovoltaic module comprising at least one photovoltaic element and at least one layer element of the invention.

**Background art**

Flame retardant products (FR) are added to manufactured materials, such as plastics and textiles, and surface finishes and coatings that inhibit, suppress, or delay the production of flames to prevent the spread of fire. In many application areas flame retardancy is a requirement or would be desirable due to increasing demands.

Chemically different type of FRs can be used depending on the requirements for the end application. As an example of conventional FRs, e.g. minerals such as aluminium hydroxide, organohalogen compounds and organophosphorus compounds can be mentioned.

FRs may be mixed with the base material (additive flame retardant products) or chemically bonded to the material (reactive flame retardant products). Mineral flame retardant products are typically of additive type while organohalogen and organophosphorus compounds can be either of reactive or of additive type.

Presently there is an increasing interest and demands in different technical fields, for instance in layer elements of various final articles, like layer elements in increasingly growing solar energy field, to provide flame retardant properties to final articles, e.g. photovoltaic (PV) modules.

Photovoltaic modules, also known as solar cell modules, produce electricity from light and are used in various kinds of applications as well known in the field. The type of the photovoltaic module can vary. The modules have typically a multilayer structure, i.e. several different layer elements which have different functions. The layer elements of the photovoltaic module can vary with respect to layer materials and layer structure. The final photovoltaic module can be rigid or flexible.

The rigid photovoltaic module can for example contain a rigid protective front layer element, such as a glass element, front encapsulation layer element, a photovoltaic element, rear (=back) encapsulation layer element, a protective back layer element, which is also called a backsheet layer element and which can be rigid or flexible; and optionally e.g. an aluminium frame.

In flexible modules all the above elements are flexible, whereby the protective front layer element can be e.g. a fluorinated layer made from polyvinylfluoride (PVF) or polyvinylidenefluoride (PVDF) polymer, and the backsheet layer element is typically a polymeric layer element.

The above exemplified layer elements can be monolayer or multilayer elements. Moreover, there may be adhesive layer(s) between the layers of an element or between the different layer elements.

Backsheet layer element may contain layer(s) comprising pigment or filler. Backsheet layer element functions typically as an insulation element. However, also photovoltaic modules with conductive backsheet layer element exist, depending on the type of the photovoltaic module.

All said terms have a well-known meaning in the art.

Until today the efficient flame retarded solutions have conventionally based on halogen chemistry. WO2012030578 of ExxonMobil discloses a polypropylene/polyethylene based thermoplastic vulcanisate solution for the PV modules, wherein all examples are based on halogenated (Br) and ZnO based flame retardant solutions. WO 2007/010318 A1 discloses compositions for household electric appliances, construction materials, and interior decorative materials with an improved flame resistance.

Presently the industry is, however, moving away from halogen containing flame retardant products due to their toxic burning gases. For instance, a monomeric N-alkoxy hindered amine, known as NOR 116 (CAS no 191680-81-6) is a UV stabiliser and also acts as flame retardant product. The drawback of this type of FR is that it needs to be combined with a synergist to reach effective flame retardancy, for example as described by VTM-0 classification according to UL94 (standard for Safety of Flammability of Plastic Materials for Parts in Devices and Appliances testing). JP2014139001 A (TOYO METALLISING KK) describes a fire resistant polyolefin film for a backsheet of PV module, wherein the polyolefin film is a three layer structure, layer A/Layer B/Layer C, wherein the layer B has 1 ~ 3 wt% of compound of the above mentioned hindered amine type combined with 2 ~ 10 wt% of a synergist which is an organic phosphate ester type of compound. The drawbacks of these FRs is poor moisture and wheathering resistance, as well as poor thermal stability.

Moreover, Polypropylene (PP) polymer may also limit the choice of a flame retardant product for PP based polymer compositions. Namely, PP is not easy to make self-igniting, since it is highly flammable. Therefore, for instance in film and fiber applications, a very effective FR would be needed to enable to use low content (preferably below 10%) of the FR in order not to sacrifice polymer properties and/or processability of the composition (reference is made to S. Zhang, A. R. Horrocks, A review of flame retardant polypropylene fibres, Prog. Polym. Sci 28 (2003) 1517-1538). Accordingly, e.g. $MgOH_2$ is feasible solution for wire and cable layers, but ~60wt% loading cannot be used for PP based film or fibre.

Another effective solution for PP is char forming systems (so called intumescent systems) which very often combine the synergistic effects of nitrogen and phosphorus chemistry. WO2014205802 of Dow describes a non-halogen containing, intumescent flame retardant product for a thermoplastic polymer composition for a PV module, which is an APP (ammonium polyphosphate which is an organic phosphinate) based FR. The loading of the FR must be high, at least of 20 wt%, to provide the intumescent effect. However, high FR loadings are undesirable for e.g. fim applications.

Moreover, the above mentioned FRs often have the problem that they absorb water (= have high water uptake behaviour) e.g. at outdoor conditions and lose their FR behaviour.

WO 2007/010318 A1 discloses flame retardant thermoplastic moulding compositions comprising: A) from 65% to 99.5% by weight of a polyolefinic polymer particularly selected among polypropylene polymers; B) from 0.1% to 30% by weight of a synergic mixture of an hypophosphorous acid metal salt and halogenated organic compounds; C) from 0,5% to 10 % by weight of a plurality of selected additives consisting of processing aids, heat and process stabilisers, UV stabilisers, antidripping agents (PTFE -Polytetrafluoroethylene), pigments, mould releasing agents, nucleating agents, and D) from 0% to 50% by weight of an inorganic filler.

WO 2011/079457 A1 discloses a halogen-free, flame retardant thermoplastic resin composition based on polypropylene and one or more thermoplastic elastomers with an organic nitrogen- and/or phosphorus-based intumescent flame retardant comprising a piperazine component.

Accordingly, it remains challenge to solve the limitations relating to polypropylene based flame retardant end applications.

Moreover, for instance, the technology of the photovoltaic modules is still developing considerably and there is a continuous need for different solutions for layer materials to meet the various demands, like flame retardancy, in photovoltaic module field.

**Figures**

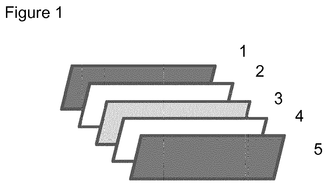

Figure 1 illustrates schematically one example of a photovoltaic module of the invention.

**The description of the invention**

Accordingly, the present invention is directed to a polypropylene composition comprising:

(i) more than 30 wt%, preferably 40 to 98.5 wt%, of a polymer of propylene (PP),
(ii) 1 to 20 wt% of a flame retardant product comprising an inorganic derivative of Phosphor,
(iii) 0.2 to 5 wt% of an additive(s) other than the flame retardant product (ii), and
(iv) 3 to 30 wt%, preferably 3 to 20 wt% of a plastomer being a copolymer of ethylene with at least one C3 to C10 alpha-olefin and optionally
(v) 0 to 45 wt% further component(s) other than (i) to (iv);

based on the total amount (100 wt%) of the polypropylene composition.

The polypropylene composition of the invention is referred herein also as e.g. "PP composition", "composition" or "composition of the invention". The "(i) polymer of propylene (PP)" is referred herein also as "PP polymer". The "(ii) flame retardant product" is referred herein also as "FR" or "flame retardant product (ii)".

Surprisingly, the composition of the invention comprising the inorganic phosphorus based FR provides an excellent flame retardant behaviour e.g. in terms of UL94 Standard requirements (Standard for Safety of Flammability of Plastic Materials for Parts in Devices and Appliances testing). Preferable embodiments of the claimed combination of polypropylene together with the FR of the invention make it possible to reach even UL94 VTM-0 (requirement according to UL94 standard). The composition of the invention is therefore highly suitable for different end applications wherein flame retardancy is required or desired.

For instance during exposure of the PP based composition to flame, an increased degradation of PP polymer often occurs which normally causes dripping whereby the drops burn which is undesired. However, in case of the present invention, any drops formed from the degrading composition of the invention do not burn but self-extinguish within seconds during 1st and 2nd ignition. PP composition of the invention has preferably also an excellent self-ignition even during 3rd or longer ignition times (outside UL94 standard scope) or unchanged performance after 1 week water bath conditioning.

Moreover, the composition of the invention has preferably excellent water protection (i.e. low water vapour transmission rate also called as low water intake behaviour). Accordingly, PP polymer absorbs hardly any water, and this property is very important in many end applications like in layer element(s) of photovoltaic module applications.

The PP polymer can be a homopolymer or copolymer of propylene. Moreover, the PP polymer can comprise one or more PP polymer components.

Preferably the PP polymer is a copolymer of propylene. More preferably the polymer of propylene (PP) is selected from one or more heterophasic copolymer of propylene (iPP) which comprises

a polypropylene matrix component and
an elastomeric propylene copolymer component which is dispersed in said polypropylene matrix.

In this embodiment the combination of heterophasic copolymer of propylene (iPP) with the FR of the invention contributes to a property balance, namely an excellent flame retardancy, and also highly feasible mechanical properties, like high stiffness and preferably also advantageous impact performance, which property balance is very desirable in many polypropylene related end applications as stated above or below. Further preferably, in this embodiment, said polymer composition of the invention has preferably advantageous water intake property, high thermal stability both during lamination, if needed in producing the article, and at end use application, and, also preferably, a very advantageous shrinkage behavior.

If desired, the property balance of the polymer composition of the invention can even be further modified with softer materials, like plastomers, or even with other component including other polymers, like PP polymer, other than the PP polymer as defined above, below or in claims.

In one preferable embodiment the heterophasic copolymer of propylene (iPP) is at least a heterophasic copolymer of propylene (A) which comprises

- a polypropylene matrix component (a1) and
- an elastomeric propylene copolymer component (a2) which is dispersed in said polypropylene matrix (a1);

and wherein the heterophasic copolymer of propylene (A) has a Melting temperature (Tm) (DSC) of at least 145°C, when measured as described in the specification under Determination methods, and a Vicat softening temperature (Vicat A) of at least 90°C (according to ASTM D 1525, method A, 50°C/h, 10N).

The heterophasic copolymer of propylene (iPP) and the heterophasic copolymer of propylene (A) is referred herein also as "PP copolymer" and, respectively, "PP copolymer (A)".

The "polypropylene matrix component (a1)" is referred herein also as "matrix component (a1)". The "elastomeric propylene copolymer component (a2)" is referred herein also as "elastomeric component (a2)".

Generally, a "heterophasic copolymer of propylene" (as used herein in connection to PP copolymer or preferable PP copolymer (A)) is a propylene copolymer comprising a propylene homo polymer or propylene random copolymer matrix component (1) and an elastomeric copolymer component (2) of propylene with one or more of ethylene and/or C4-C8 alpha olefin comonomers, wherein the elastomeric (amorphous) copolymer component (2) is (finely) dispersed in said propylene homo or random copolymer matrix polymer (1).

As well known "comonomer" refers to copolymerisable comonomer units.

The XCS fraction of PP copolymer (or preferable PP copolymer (A)) is regarded herein as the elastomeric component (or preferable elastomeric component (a2)), since the amount of XCS fraction in the matrix component is conventionally markedly lower. For instance, in case the matrix component (or preferable matrix component (a1)) is a homopolymer of propylene, then the amount of the xylene cold soluble (XCS) fraction (amorphous fraction) (wt%) of the heterophasic copolymer of propylene is understood in this application also as the amount of the elastomeric propylene copolymer component present in the PP copolymer (or preferable PP copolymer (A)).

The polymer composition may optionally comprise (v) further components other than the components (i) to (iv).

The present invention is also directed to a use of an inorganic derivative of Phosphor (ii) as a flame retarding agent for a polypropylene composition as described above or below or in claims.

The property balance makes the composition of the invention highly feasible for different articles in various end applications wherein flame retardant activity for the article is desired or required.

Accordingly the invention further provides a use of the polypropylene composition of the invention for producing an article comprising the polymer composition of the invention, as defined above or below or in claims.

The invention is further directed to an article comprising the polymer composition of the invention as defined above or below or in claims.

The preferred article comprises a layer element which comprises at least one layer comprising the polymer composition of the invention, as defined above or below or in claims.

The invention further provides a layer element comprising at least one layer which comprises the polymer composition of the invention, as defined above or below or in claims.

Preferably, said at least one layer of the layer element of the article of the invention comprises at least 70 wt%, preferably at least 80 wt%, preferably at least 90 wt%, preferably 90 to 100 wt%, preferably consists of, the polymer composition of the invention.

Accordingly, the layer element of the invention can be a monolayer element or a multilayer element. In case the layer element is a monolayer element, then the "at least one" layer, i.e. the monolayer element, comprises the composition of the invention. In case of a multilayer element, the expression "at least one layer" of a layer element means that said element can comprise two or more layers, wherein at least one layer comprises the polymer composition of the invention. The other layer(s) may comprise different layer material(s) or may comprise the polymer composition of the invention. It is evident that the material of the other layers of a multilayer element may vary and can be chosen by a skilled person depending on the desired end application.

Moreover, the mono- or multilayer element of the invention may be part of an assembly, like photovoltaic module, comprising several mono- and/or multilayer elements with different functionality and arranged in a desired layered multi-element structure, wherein one or more of the mono- and/or multilayer elements may comprise one or more layers of the polymer composition of the invention. Accordingly, in case of an assembly with two or more layer elements, then layer(s) of the polymer composition of the invention may be present in one or more of such layer elements.

Preferably the layer element is a mono- or multilayer element comprising at least one layer comprising the polymer composition of the invention.

Herein the definitions "layer element of the invention comprising (or which comprises) at least one layer comprising (or which comprises) the polymer composition of the invention" and "at least one layer of the layer element of the invention comprising (or which comprises) the polymer composition of the invention" are used herein interchangeably to refer the layer(s) and/or the layer element of the invention, as evident from the context.

Moreover, due to excellent property balance as stated above and below, the composition of the invention enables to use multilayer elements e.g. in photovoltaic modules, which elements consist of polyolefin based layers. Such polyolefin polymer(s) can comprise e.g. one or more monomers selected from ethylene and/or alpha-olefins, typically C3- to C10-alpha-olefins. Additionally, further functional units can be incorporated to the polyolefin e.g. by grafting. For instance, polar functional groups, such as maleic anhydride (MAH), can be grafted to such a polyolefin to form functional polymers thereof.

PP polymer of the invention as defined above, below or in claims, is without such grafted functional units, i.e. the term PP polymer of the invention excludes the PP polymer grafted with functional groups. However, the PP composition of the invention may additionally comprise further polymers as further component(s) (v), e.g. polypropylene polymer component(s) which is grafted with functional groups. Such functionally grafted polypropylene components are not calculated to the amount of "PP polymer" but in the amount of optional further components (v) referred above or below.

Furthermore, the article is a photovoltaic module comprising at least one photovoltaic element and at least one layer element which is the layer element of the invention comprising at least one layer which comprises the polymer composition.

Moreover, the invention provides further a photovoltaic module as said article, which PV module comprises at least one photovoltaic element and at least one layer element which is the layer element of the invention comprising at least one layer which comprises the polymer composition.

The "photovoltaic element" means that the element has photovoltaic activity. The photovoltaic element can be e.g. an element of photovoltaic cell(s), which has a well-known meaning in the art. Silicon based material, e.g. crystalline silicon, is a non-limiting example of materials used in photovoltaic cell(s). Crystalline silicon material can vary with respect to crystallinity and crystal size, as well known to a skilled person. Alternatively, the photovoltaic element can be a substrate layer on one surface of which a further layer or deposit with photovoltaic activity is subjected, for example a glass layer, wherein on one side thereof an ink material with photovoltaic activity is printed, or a substrate layer on one side thereof a material with photovoltaic activity is deposited. For instance, in well-known thin film solutions of photovoltaic elements e.g. an ink with photovoltaic activity is printed on one side of a substrate, which is typically a glass substrate. Accordingly, the at least one layer of the invention can also be a layer in any layer element of a thin film based photovoltaic module.

The photovoltaic element is most preferably an element of photovoltaic cell(s).

"Photovoltaic cell(s)" means herein a layer element(s) of photovoltaic cells, as explained above, together with connectors.

It is preferred that said at least one layer element of the photovoltaic module of the invention comprising the polymer composition of the invention, as defined above or below or in claims, is a backsheet layer element.

Accordingly, the invention further provides a backsheet layer element of a photovoltaic module which is selected from

- a backsheet monolayer element comprising the polymer composition of the invention, and
- a backsheet multilayer element wherein at least one layer comprises the polymer composition of the invention;

as defined above or below or in claims.

The composition of the invention, the PP polymer, preferably the PP copolymer, preferably PP copolymer (A), the article, preferably the at least one layer of the mono- or multilayer element, like backsheet element of a photovoltaic module, and the photovoltaic module of the invention are described below and claims with further details, preferred embodiments, ranges and properties, which preferred embodiments, ranges and properties can be in any combination and combined in any order.

## Polypropylene composition of the invention

The polymer composition may comprise further components depending on the end application, any additional properties desired for an end product etc., as evident for a skilled person.

Accordingly, in a preferable embodiment of the invention, the polypropylene composition comprises, preferably consists of,

(i) more than 30, preferably 40 to 98.5, preferably 50 to 98.5, preferably 60 to 98, preferably 70 to 98, wt% of a polymer of propylene (PP),

(ii) 1 to 20, preferably 2 to 15, more preferably 3 to 12, wt% of a flame retardant product comprising an inorganic derivative of Phosphor,

(iii) 0.2 to 5, preferably 0.3 to 4.5, more preferably 0.4 to 4, wt% of an additive(s) other than the flame retardant product (ii), and

(iv) 3 to 30, preferably 3 to 20, preferably 3 to 18, more preferably 4 to 15, wt% of a plastomer being a copolymer of ethylene with at least one C3 to C10 alpha-olefin, and optionally

(v) 0 to 45, wt% further component(s) other than (i) to (iv);

based on the total amount (100 wt%) of the polymer composition of the invention, as defined above or below or in claims.

"Based on the total amount (100 wt%) of the polymer composition of the invention" means that that the amounts of the components present in the polymer composition total to 100wt%.

The polymer of propylene (PP) can also be a mixture of two or more polymer of propylene (PP) components.

In one embodiment the polymer of propylene (PP) is a copolymer of propylene, preferably at least one heterophasic copolymer of propylene (iPP) (referred herein also as "PP copolymer") which comprises, preferably consists of,

a polypropylene matrix component and
an elastomeric propylene copolymer component which is dispersed in said polypropylene matrix; or a mixture of two or more, e.g. two such heterophasic copolymers of propylene (iPP) which are different.

Similarly, the a copolymer of propylene, preferably PP copolymer, can be a mixture of two different PP copolymer components, wherein each PP copolymer component comprises a polypropylene matrix component and an elastomeric propylene copolymer component which is dispersed in said polypropylene matrix.

The copolymer of propylene, preferably the PP copolymer, is preferably a propylene copolymer comprising a propylene homopolymer or propylene random copolymer with one or more of ethylene and/or C4-C8 alpha olefin comonomers as the matrix component and an elastomeric copolymer component of propylene with one or more of ethylene and/or C4-C8 alpha olefin comonomers, wherein the elastomeric (amorphous) copolymer component is dispersed in said propylene homo or random copolymer matrix polymer.

The total comonomer content of the copolymer of propylene, preferably of the PP copolymer, is preferably of 0.5 to 20, preferably of 1.0 to 20, wt%, when measured as described in the specification under Determination methods, preferably the comonomer(s) is selected from ethylene and/or C4-C8 alpha olefin comonomers, more preferably from ethylene.

Preferably the polypropylene matrix component of the PP copolymer is a homopolymer of propylene.

In one preferable embodiment the polymer of propylene (PP) is a heterophasic copolymer of propylene (iPP) which comprises a heterophasic copolymer of propylene (A) (referred herein also as PP copolymer (A)) which comprises, preferably consists of, a polypropylene matrix component (a1) and

an elastomeric propylene copolymer component (a2) which is dispersed in said polypropylene matrix (a1),
and wherein the heterophasic copolymer of propylene (A) has a Melting temperature (Tm) (DSC) of at least 145°C, when measured as described in the specification under Determination methods, a Vicat softening temperature (Vicat A) of at least 90°C (according to ASTM D 1525, method A, 50°C/h, 10N).

In one embodiment the heterophasic copolymer of propylene (iPP) consists of the heterophasic copolymer of propylene (A).

In another embodiment the heterophasic copolymer of propylene (iPP) comprises the heterophasic copolymer of propylene (A) and one or more, e.g. one, further heterophasic copolymer of propylene (iPP) which is different from PP copolymer (A).

The melting temperature, Tm, of PP copolymer (A) is preferably of 158 to 170, preferably of 160 to 170,°C, when measured as described in the specification under Determination methods.

The Vicat softening temperature (Vicat A) of PP copolymer (A) is preferably of at least 100, preferably of 130 to 200, °C.

Preferably, the polypropylene matrix (a1) of the PP copolymer (A) is a homopolymer of propylene.

Even more preferably the heterophasic copolymer of propylene (A) has one or more, in any order, preferably all, of the following further properties:

- $MFR_2$ of 0.2 to 20.0, preferably 0.2 to 15.0, preferably of 0.5 to 10, g/10 min when measured according to ISO 1133 (at 230°C and 2.16 kg load),
- Xylene cold soluble (XCS) fraction in amount of 3 to 30, preferably of 5 to 25, wt%, when measured as described in specification under Determination methods,
- Comonomer content of 0.5 to 20, preferably of 1.0 to 20, wt%, when measured as described in the specification under Determination methods, preferably the comonomer(s) is selected from ethylene and/or C4-C8 alpha olefin comonomers, more preferably from ethylene,
- Flexural modulus of at least 900, preferably of 950 to 3000, preferably of 1000 to 2400, MPa, when measured according to ISO178 as described in the specification under Determination methods, and/or
- Density of 900 to 910 $kg/m^3$, when measured as described in the specification under Determination methods.

The polypropylene composition according to any of the preceding claims, wherein the inorganic derivative of Phosphor of the flame retardant product (ii) is preferably an inorganic Phosphinic acid derivative, preferably an inorganic salt of Phosphinic acid, preferably a metal salt of Phosphinic acid, preferably an aluminium salt of Phosphinic acid (also known as Aluminum hypophosphite).

According to one preferable embodiment the inorganic derivative of Phosphor is an aluminium salt of Phosphinic acid having a CAS number of 7784-22-7.

Suitable inorganic phosphorous based FRs are preferably commercially available. An highly suitable example of commercial FR, is the flame retardant product sold under the trade name Phoslite B404A(F), produced and supplied by ITALMATCH CHEMICALS S.p.A.

Accordingly the amount of flame retardant product (ii) (=FR) means herein the amount (wt%, based on the PP composition) of the flame retardant product (ii) as supplied by producer thereof. Accordingly FR may contain further components in minor amounts, like additives, flame retardant synergists and/or carrier medium. Thus it is to be understood that such further components are calculated to the amount of the FR.

Thus the flame retardant product (ii) may optionally further comprise so called synergist compound which further enhances the flame retardant properties. Examples of such flame retardant synergists are based on organic phosphorus chemistry like organic phosphinates.

More preferably the FR of the invention comprises at least 60, preferably at least 70 to 99, more preferably at least 75 to 99, preferably 80 to 99, more preferably at least 85 to 99, wt% of the inorganic derivative of Phosphor.

It is preferred that FR of the present invention is without ammonium polyphosphate and further flame retardant synergist, preferably FR of the present invention is without ammonium polyphosphate. I.e. FR does not comprise any ammonium polyphosphate and further flame retardant synergist, preferably FR of the present invention does not comprise ammonium polyphosphate.

The polymer composition comprises a plastomer (iv).

Thus, the polypropylene composition of the invention comprises,

(i) more than 30, preferably 40 to 98.5, preferably 50 to 98.5, preferably 60 to 98, preferably 70 to 98, wt% of a polymer of propylene (PP),

(ii) 1 to 20, preferably 2 to 15, more preferably 3 to 12, wt% of a flame retardant product comprising an inorganic derivative of Phosphor,

(iii) 0.2 to 5, preferably 0.3 to 4.5, more preferably 0.4 to 4, wt% of an additive(s) other than the flame retardant product (ii),

(iv) 3 to 30, preferably 3 to 20, preferably 3 to 18, more preferably 4 to 15, more preferably 4 to 12, wt% of a plastomer being a copolymer of ethylene with at least one C3 to C10 alpha-olefin, and optionally

(v) 0 to 45, wt% further component(s) other than (i) to (iv);

based on the total amount (100 wt%) of the polymer composition of the invention, as defined above or below or in claims.

The plastomer (iv) is a copolymer of ethylene with at least one C3 to C10 alpha-olefin. The plastomer (iv) has preferably one or all, preferably all, of the below properties

- a density of 860 to 915, preferably 860 to 910, preferably 860 to 900, kg/m$^3$,
- MFR$_2$ of 0.1 to 50, preferably 0.2 to 40, (190°C, 2.16kg), and/or
- the alpha-olefin comonomer is octene.

The plastomer (iv) is preferably produced using a metallocene catalyst, which term has a well-known meaning in the prior art. The suitable plastomers (iv) are commercially available, e.g. plastomer products under tradename QUEO™, supplied by Borealis, or Engage™, supplied by ExxonMobil, Lucene supplied by LG, or Tafmer supplied by Mitsui. If present, then the amount of the optional plastomer (v) is lower than the amount of polymer PP (i).

The further component(s) (v) can be e.g. a pigment and/or a polymer other than PP polymer or plastomer (iv). Pigment has a well-known meaning in the art.

The optional further polymer can also be a functionalised polymer (e.g. polymer which is functionalised by grafting). In case the polymer composition comprises further polymers (different from (i) and (iv)) as optional further component(s) (v), then the amount of such further polymer(s) is less than the amount of PP polymer. I.e the amount of the PP polymer is the highest based on the combined amount of the polymeric component(s) present in the polymer composition.

Preferably no filler is present in the polymer composition. I.e. preferably polymer composition is without filler. Filler has a well-known meaning and is different from pigment as well known in the art.

The optional pigment in polypropylene composition, if present, is preferably white pigment. White pigment is preferably TiO$_2$. Such pigments are well known and e.g. available as commercial TiO$_2$ pigment, also referred herein as TiO$_2$. Any carrier medium, e.g. carrier polymer, is calculated to the amount of the pigment. The amount of the pigment, if present, is preferably 2 to 45, preferably 5 to 45, preferably 10 to 45, wt% based on the total amount (100 wt%) of the polymer composition.

In one embodiment of the composition, pigment is present as said further component (v). In one embodiment of the composition, pigment is not present as said further component (v). I.e. polymer composition is without pigment.

In one embodiment of the composition, no further component(s) (v) is present in the polymer composition.

Accordingly, the composition of the invention comprises also additives (iii) other than the flame retardant product (ii) and optional further components (v), like pigment. Such additives (iii) are preferably suitable e.g. for film or photovoltaic module applications, including without limiting to, antioxidants, UV light stabilisers, nucleating agents, clarifiers, brighteners, acid scavengers, as well as slip agents, etc. Such additives are generally commercially available and are described, for example, in "Plastic Additives Handbook", 5th edition, 2001 of Hans Zweifel.

Each additive (iii) can be used e.g. in conventional amounts.

Any optional carrier polymers of flame retardant product (ii), additive(s) (iii) and/or the optional further component(s) (v), e.g. master batches of components (ii), (iii) or, respectively, (v) together with a carrier polymer, are calculated to the amount of the respective component (ii), (iii) or (v), based on the amount (100 %) of the composition of the invention.

The polypropylene composition of the invention preferably has an MFR$_2$ of 1.0 to 25.0, preferably of 2.0 to 20, preferably of 3 to 15, g/10 min, when measured according to ISO 1133 (at 230 °C with 2.16 kg load) as defined below under the Determination methods. The polypropylene composition has more preferably MFR$_2$ of 3 to 10 g/10 min.

The polypropylene composition of the invention preferably has a Xylene cold soluble (XCS) content in amount of 5 to 40, preferably 5 to 35%, when measured as defined below under the Determination methods. The XCS of the polypropylene composition is more preferably of 10 to 40, preferably 15 to 30%.

The polypropylene composition of the invention preferably has a Vicat softening temperature (Vicat A) of 100 to 200, preferably 105 to 165, more preferably of 110 to 165,°C, when measured as described below under Determination methods. The Vicat A of the polypropylene composition is more preferably of 130 to 160, preferably of 130 to 155,°C.

The polypropylene composition of the invention preferably has a Tensile modulus of at least 800, preferably of 800 to 3000, preferably of 900 to 3000, preferably of 1000 to 2700, MPa, when measured in machine direction (MD) from 200 μm monolayer cast film sample as defined below under the Determination methods. Said Tensile modulus of the polypropylene composition is preferably of 1000 to 2000 MPa.

The polypropylene composition of the invention preferably has a Strain at break of more than 400, preferably of 500 to 1500, %, when measured in machine direction (MD) from 200 μm monolayer cast film sample s defined below under the Determination methods. Said Strain at break of the polypropylene composition is preferably of 600 to 1000%.

PP polymer can be commercially available grade or can be produced e.g. by conventional polymerisation processes, process conditions using e.g. the conventional catalyst system known in the literature.

One feasible polymerisation process including the conditions and catalyst system is generally described below for the PP copolymer, i.e. for the heterophasic copolymer of propylene (iPP), and naturally applies also for the preferable heterophasic copolymer of propylene (A) of the polypropylene composition. It is evident that the below description can be applied to a homopolymer or a random copolymer of polypropylene, as well, whereby said polymers can be polymerised e.g. in optional prepolymerisation reactor following first reactor (preferably loop reactor) and then second reactor (preferably first gas phase reactor) using the conditions as described below.

The polypropylene matrix component of the PP copolymer may be a unimodal or a multimodal random copolymer or homopolymer of propylene which both have a well-known meaning. Multimodal random copolymer or homopolymer of propylene means herein that it has at least two polymer fractions which are different e.g. with one or two of the following properties: 1) weight average molecular weight or 2) MFR. In case of random copolymer of propylene as the matrix component, the copolymer can also be multimodal with respect to 3) comonomer content, optionally in combination with any or both of the above differences 1) and 2).

The matrix component of the PP copolymer can be a homopolymer or random copolymer of propylene. It is preferred that the matrix component of the PP copolymer is a homopolymer of propylene.

Accordingly, it is preferred that all the comonomers as defined above, which are present in the PP copolymer, originate from the elastomeric propylene copolymer component.

It is preferred that the PP copolymer consists of the matrix component and the elastomeric component. The PP copolymer may optionally comprise a prepolymer fraction, as well known in the polymer field. In such case the amount of the prepolymer is calculated to the amount of the matrix component.

As said, the iPP copolymer can be commercially available grade or can be produced e.g. by conventional polymerisation processes.

As to polymerisation of the heterophasic copolymer of propylene, the individual components (matrix and elastomeric components) of PP copolymer can be produced separately and blended mechanically by mixing in a mixer or extruder. However it is preferred that the PP copolymer comprising the matrix component and the elastomeric component are produced in a sequential process, using reactors in serial configuration and operating at different reaction conditions. As a consequence, each fraction prepared in a specific reactor will have its own molecular weight distribution, MFR and/or comonomer content distribution.

The PP copolymer according to this invention is preferably produced in a sequential polymerisation process, i.e. in a multistage process, known in the art, wherein the matrix component is produced at least in one slurry reactor, preferably at least in a slurry reactor, and optionally, and preferably in a subsequent gas phase reactor, and subsequently the elastomeric component is produced at least in one, i.e. one or two, gas phase reactor(s) (gpr), preferably in one gpr.

Accordingly it is preferred that the PP copolymer is produced in a sequential polymerisation process comprising the steps of

(a) polymerising propylene and optionally at least one ethylene and/or C4 to C12 $\alpha$-olefin, preferably propylene as the only monomer, in the presence of a catalyst in a first reactor (R1),

(b) transferring the reaction mixture of the polymerised first polypropylene, preferably propylene homopolymer, fraction together with the catalyst, into a second reactor (R2),

(c) polymerising in the second reactor (R2) and in the presence of said first polypropylene polymer, propylene and optionally at least one ethylene and/or C4 to C12 $\alpha$-olefin, preferably propylene as the only monomer, in obtaining thereby the second polypropylene fraction, preferably said second polypropylene fraction is a second propylene homopolymer, whereby said first polypropylene fraction and said second polypropylene fraction form the matrix component of the PP copolymer,

(d) transferring the reaction mixture of the polymerised matrix component of step (c) into a third reactor (R3),

(e) polymerising in the third reactor (R3) and in the presence of the matrix component obtained in step (c), propylene and at least one ethylene and/or C4 to C12 $\alpha$-olefin obtaining thereby the elastomeric component of PP copolymer, wherein the elastomeric propylene copolymer component is dispersed in said matrix component.

Optionally the elastomeric component of the PP copolymer can be produced in two reactors, whereby after above step (e),

(f) transferring the PP product of step (e) in which the first elastomeric propylene copolymer fraction is dispersed in a fourth reactor (R4), and

(g) polymerising in the fourth reactor (R4) and in the presence of the mixture obtained in step (e) propylene and at least one ethylene and/or C4 to C12 $\alpha$-olefin obtaining thereby the second elastomeric propylene copolymer fraction, whereby the matrix component of step (c) dispersed in the the first elastomeric propylene copolymer fraction and in the second elastomeric propylene copolymer fraction form the PP copolymer.

Preferably between the second reactor (R2) and the third reactor (R3) the monomers are flashed out.

The term "sequential polymerisation process" indicates that the PP copolymer is produced in at least two, like three, reactors connected in series. Accordingly the present process comprises at least a first reactor (R1) and a second reactor (R2), more preferably a first reactor (R1), a second reactor (R2), a third reactor (R3) and optionally a fourth reactor (R4). The term "polymerisation reactor" shall indicate one of the main polymerisation steps. Thus in case the process consists of four polymerisation reactors, this definition does not exclude the option that the overall process comprises for instance a prepolymerisation step in a prepolymerisation reactor. The term "consist of" is only a closing formulation in view of the main polymerisation reactors.

Any prepolymer fraction is counted into the amount of the first polypropylene fraction.

The first reactor (R1) is preferably a slurry reactor (SR) and can be any continuous or simple stirred batch tank reactor or loop reactor operating in bulk or slurry. Bulk means a polymerisation in a reaction medium that comprises of at least 60 % (w/w) monomer. According to the present invention the slurry reactor (SR) is preferably a (bulk) loop reactor (LR).

The second reactor (R2), the third reactor (R3) and the optional fourth reactor (R4) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like a loop reactor (LR), whereas the second reactor (R2), the third reactor (R3) and the optional fourth reactor (R4) are gas phase reactors (GPR). Accordingly for the instant process at least three, namely a slurry reactor (SR), like a loop reactor (LR), a first gas phase reactor (GPR-1), a second gas phase reactor (GPR-2) and an optional a third gas phase reactor (GPR-3) connected in series are used. In case of a prepolymerisation step a prepolymerisation reactor is placed prior to the slurry reactor (SR).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of LyondellBasell.

Preferably, in the instant process for producing the PP copolymer as defined above the conditions for the first reactor (R1), i.e. the slurry reactor (SR), like a loop reactor (LR), of step (a) may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the second gas phase reactor (GPR-2) and in the optional third gas phase reactor (GPR-3) are similar to the second reactor (R2) (= first gas phase reactor (GPR-1).

The residence time can vary in the three reactor zones.

In one embodiment of the process for producing the matrix component of the PP copolymer, the residence time in bulk reactor, e.g. loop, is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerisation may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerisation with the catalyst system, as described in detail below, comprising a Ziegler-Natta procatalyst, an external donor and optionally a cocatalyst.

In a preferred embodiment, the prepolymerisation is conducted as bulk slurry polymerisation in liquid propylene, i.e. the liquid phase mainly comprises propylene, with minor amount of other reactants and optionally inert components dissolved therein.

The prepolymerisation reaction is typically conducted at a temperature of 10 to 60 °C, preferably from 15 to 50 °C, and more preferably from 20 to 45 °C.

The pressure in the prepolymerisation reactor is not critical but must be sufficiently high to maintain the reaction mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or to the walls of the reactor.

The precise control of the prepolymerisation conditions and reaction parameters is within the skills of the skilled person.

After the PP copolymer has been removed from the last polymerisation stage, it is preferably subjected to process steps for removing the residual hydrocarbons from the polymer. Such processes are well known in the art and can include pressure reduction steps, purging steps, stripping steps, extraction steps and so on. Also combinations of different steps are possible. After the removal of residual hydrocarbons the PP copolymer is preferably mixed with additives as it is well known in the art. Such additives are described below under the polymer composition of the invention. The polymer particles are then extruded to pellets as it is known in the art. Preferably co-rotating twin screw extruder is used for the extrusion step. Such extruders are manufactured, for instance, by Coperion (Werner & Pfleiderer) and Japan Steel Works.

The PP copolymer of the invention is preferably produced by polymerisation using any suitable Ziegler-Natta type. Typical suitable Ziegler-Natta type catalyst is stereospecific, solid high yield Ziegler-Natta catalyst component comprising as essential components Mg, Ti and Cl. In addition to the solid catalyst a cocatalyst(s) as well external donor(s) are typically used in polymerisation process.

Components of catalyst may be supported on a particulate support, such as inorganic oxide, like silica or alumina, or, usually, the magnesium halide may form the solid support. It is also possible that catalysts components are not supported on an external support, but catalyst is prepared by emulsion-solidification method or by precipitation method. Alternatively the PP copolymer of the invention can be produced using a modified catalyst system as described below.

More preferably, a vinyl compound of the formula (I) is used for the modification of the catalyst:

$$CH2=CH-CHR1R2 \qquad (I)$$

wherein R1 and R2 together form a 5- or 6-membered saturated, unsaturated or aromatic ring, optionally containing substituents, or independently represent an alkyl group comprising 1 to 4 carbon atoms, whereby in case R1 and R2 form an aromatic ring, the hydrogen atom of the -CHR1R2 moiety is not present.

More preferably, the vinyl compound (I) is selected from: vinyl cycloalkane, preferably vinyl cyclohexane (VCH), vinyl cyclopentane, 3-methyl-1-butene polymer and vinyl-2-methyl cyclohexane polymer. Most preferably the vinyl compound (I) is vinyl cyclohexane (VCH) polymer.

The solid catalyst usually also comprises an electron donor (internal electron donor) and optionally aluminium. Suitable internal electron donors are, among others, esters of carboxylic acids or dicarboxylic acids, like phthalates, maleates, benzoates, citraconates, and succinates, 1,3-diethers or oxygen or nitrogen containing silicon compounds. In addition mixtures of donors can be used.

The cocatalyst typically comprises an aluminium alkyl compound. The aluminium alkyl compound is preferably trialkyl aluminium such as trimethylaluminium, triethylaluminium, tri-isobutylaluminium or tri-n-octylaluminium. However, it may also be an alkylaluminium halide, such as diethylaluminium chloride, dimethylaluminium chloride and ethylaluminium sesquichloride.

Suitable external electron donors used in polymerisation are well known in the art and include ethers, ketones, amines, alcohols, phenols, phosphines and silanes. Silane type external donors are typically organosilane compounds containing Si-OCOR, Si-OR, or Si-NR$_2$ bonds, having silicon as the central atom, and R is an alkyl, alkenyl, aryl, arylalkyl or cycloalkyl with 1-20 carbon atoms are known in the art.

Examples of suitable catalysts and compounds in catalysts are shown in among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, EP 2610271, WO 2012/007430. WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342, US 4657882.

The obtained PP copolymer is then compounded together with the flame retardant product (ii), additives (iii), optional plastomer (iv), and with optional further component(s) (v) in a known manner. The compounding can be effected in a conventional extruder e.g. as described above and the obtained melt mix is produced to an article or, preferably, pelletised before used for the end application. Part or all of the additives or optional components may be added during the compounding step.

## End applications of the polymer composition

The invention is further directed to a use of the polymer composition as defined above or below for producing an article comprising the polymer composition, which comprises

> (i) more than 30, preferably 40 to 98.5 wt% of a polymer of propylene (PP),
> (ii) 1 to 20 wt% of a flame retardant product comprising an inorganic derivative of Phosphor,
> (iii) 0.2 to 5 wt% of an additive(s) other than the flame retardant product (ii), and
> (iv) 3 to 30, preferably 3 to 20 wt% of a plastomer being a copolymer of ethylene with at least one C3 to C10 alpha-olefin, and optionally
> (v) 0 to 45 wt% further component(s) other than (i) to (iv);

based on the total amount (100 wt%) of the polypropylene composition, as defined above or below or in claims.

The invention is further directed to an article comprising the polymer composition, which comprises, preferably consists of,

> (i) more than 30, preferably 40 to 98.5 wt% of a polymer of propylene (PP),
> (ii) 1 to 20 wt% of a flame retardant product comprising an inorganic derivative of Phosphor,
> (iii) 0.2 to 5 wt% of an additive(s) other than the flame retardant product (ii), and
> (iv) 3 to 30, preferably 3 to 20 wt% of a plastomer being a copolymer of ethylene with at least one C3 to C10 alpha-olefin, and optionally
> (v) 0 to 45 wt% further component(s) other than (i) to (iv);

preferably which comprises, preferably consists of,

> (i) more than 30, preferably 40 to 98.5, preferably 50 to 98.5, preferably 60 to 98, preferably 70 to 98, wt% of a polymer of propylene (PP),
> (ii) 1 to 20, preferably 2 to 15, more preferably 3 to 12, wt% of a flame retardant product comprising an inorganic derivative of Phosphor,
> (iii) 0.2 to 5, preferably 0.3 to 4.5, more preferably 0.4 to 4, wt% of an additive(s) other than the flame retardant product (ii), and
> (iv) 3 to 30, preferably 3 to 20, preferably 3 to 18, more preferably 4 to 15, wt% of a plastomer being a copolymer of ethylene with at least one C3 to C10 alpha-olefin, and optionally
> (v) 0 to 45 wt% further component(s) other than (i) to (iv);

based on the total amount (100 wt%) of the polymer composition, as defined above or below or in claims.

The article preferably comprises a layer element which comprises at least one layer comprising the polymer composition of the invention, as defined above or below or in claims.

The article can comprise one layer element or two or more layer elements. In case of two or more layer elements, at least one of the layer elements comprises at least one layer comprising the polymer composition of the invention, as defined above or below or in claims.

Thus the invention further provides a layer element comprising at least one layer which comprises the polymer composition of the invention, as defined above or below or in claims.

Preferably, said at least one layer of the layer element of the article of the invention comprises at least 70 wt%, preferably at least 80 wt%, preferably at least 90 wt%, preferably 90 to 100 wt%, preferably consists of, the polymer composition of the invention.

Also preferably, said layer element of the article of the invention comprises at least 50 wt%, preferably at least 60 wt%, preferably 60 to 95 wt%, preferably 70 to 90 wt%, of the polymer composition of the invention.

The article is preferably a film for various end applications e.g. for packaging applications without limiting thereto. In this invention the term "film" covers also thicker sheet structures e.g. for thermoforming.

In one embodiment the layer element of the article of the invention is preferably a film which is selected from

- a monolayer film comprising the polymer composition of the invention, and
- a multilayer film wherein at least one layer comprises the polymer composition of the invention; as defined above or below or in claims.

In a preferred embodiment the layer element of the invention is a layer element of a photovoltaic module, which layer element is selected from

- a monolayer element comprising the polymer composition of the invention, and

- a multilayer element wherein at least one layer comprises the polymer composition of the invention; as defined above or below or in claims.

A monolayer element can be produced by extrusion, e.g. cast film or blown film extrusion. Layer elements of a multilayer element can be produced by extrusion, e.g. by coextrusion, by lamination or by a combination of extrusion and lamination. Extrusion and lamination processes are well-known in the art.

The thickness of the layer element and in case of multilayer element, the thickness of the individual layers of the element, can vary depending on the end application, as evident for a skilled person. As an example only, the thickness of the layer element of the invention can be e.g. 0.02 to 5 mm, preferably 0.05 to 3 mm. Moreover, as an example only, the thickness of the at least one layer of the layer element can be 5.0 to 400 $\mu$m.

In a preferred embodiment the article is a photovoltaic module which comprises a layer element of the invention wherein the layer element is selected from

- a monolayer element comprising the polymer composition of the invention, and
- a multilayer element wherein at least one layer comprises the polymer composition of the invention; as defined above or below or in claims.

**Photovoltaic module**

The layer element, i.e. the mono- or multilayer element, of the invention is preferably a monolayer element or a multilayer element of a photovoltaic module as the article of the invention.

The invention thus provides a photovoltaic module comprising at least one photovoltaic element and at least one layer element which is the layer element of the invention comprising at least one layer which comprises the polymer composition, which comprises

(i) more than 30, preferably 40 to 98.5 wt% of a polymer of propylene (PP),
(ii) 1 to 20 wt% of a flame retardant product comprising an inorganic derivative of Phosphor,
(iii) 0.2 to 5 wt% of an additive(s) other than the flame retardant product (ii), and
(iv) 3 to 30, preferably 3 to 20 wt% of a plastomer being a copolymer of ethylene with at least one C3 to C10 alpha-olefin and optionally
(v) 0 to 45 wt% further component(s) other than (i) to (iv);

based on the total amount (100 wt%) of the polypropylene composition, preferably which comprises, preferably consists of,

(i) more than 30, preferably 40 to 98.5, preferably 50 to 98.5, preferably 60 to 98, preferably 70 to 98, wt% of a polymer of propylene (PP),
(ii) 1 to 20, preferably 2 to 15, more preferably 3 to 12, wt% of a flame retardant product comprising an inorganic derivative of Phosphor,
(iii) 0.2 to 5, preferably 0.3 to 4.5, more preferably 0.4 to 4, wt% of an additive(s) other than the flame retardant product (ii), and
(iv) 3 to 30, preferably 3 to 20, preferably 3 to 18, more preferably 4 to 15, wt% of a plastomer being a copolymer of ethylene with at least one C3 to C10 alpha-olefin, and optionally
(v) 0 to 45 wt% further component(s) other than (i) to (iv);

based on the total amount (100 wt%) of the polymer composition, as defined above or below or in claims.

In case the layer element of the photovoltaic module of the invention is a multilayer element, then in one embodiment the at least one layer of the multilayer element is a laminated layer of the multilayer element.

Alternatively, in case the layer element of the photovoltaic module of the invention is a multilayer element, then in another embodiment the at least one layer of the multilayer element is an extruded, suitably a coextruded, layer of a multilayer element.

More preferably, the photovoltaic module of the invention comprises, in the given order, a protective top layer element, a front encapsulation layer element, at least one photovoltaic layer element, a rear encapsulation layer element, a backsheet layer element and optionally a protective cover, wherein at least one of said layer elements, preferably the backsheet layer element, comprises at least one layer comprising said polymer composition of the invention, as defined above or below or in claims.

Preferably, said at least one layer of the layer element of the PV module as the article of the invention comprises at least 70 wt%, preferably at least 80 wt%, preferably at least 90 wt%, preferably 90 to 100 wt%, preferably consists of, the polymer composition of the invention.

Also preferably, the layer element of the PV module as the article of the invention comprises at least 50 wt%, preferably at least 60 wt%, preferably 60 to 95 wt%, preferably 70 to 90 wt%, of the polymer composition of the invention.

As well known, the elements and the layer structure of the photovoltaic module of the invention can vary depending on the desired type of the module. The photovoltaic module can be rigid or flexible. The rigid photovoltaic module can for example contain a rigid protective front layer element, such as a glass element, a front encapsulation layer element, a photovoltaic layer element, a rear encapsulation layer element, a backsheet layer element which can be rigid or flexible; and optionally e.g. an aluminium frame. In flexible modules all the above elements are flexible, whereby the protective front and back as well as the front and rear encapsulation layer elements are typically based on polymeric layer elements.

It is preferred that said at least one layer element of the photovoltaic module of the invention, as defined above or below or in claims, is a backsheet layer element.

Accordingly, the invention further provides a backsheet layer element of a photovoltaic module as the article of the invention, wherein the backsheet element is selected from

- a backsheet monolayer element comprising the polymer composition of the invention, and
- a backsheet multilayer element wherein at least one layer comprises the polymer composition of the invention; as defined above or below or in claims.

A backsheet monolayer element can be produced by extrusion, e.g. by cast or blown film extrusion. A backsheet multilayer element of the invention can be produced by laminating the layers thereof. As a result, a laminated backsheet multilayer element is obtained. Alternatively, a backsheet multilayer element of the invention can be produced by extruding the layers thereof, e.g. by (co)extrusion. It is also possible that the part of the layers of the backsheet multilayer element of the invention are laminated and part of the layers are e.g. (co)extruded, i.e the backsheet multilayer element is a combination of laminated and (co)extruded layers. The (co)extrusion means herein cast extrusion or coextrusion.

Preferably, the layer of the backsheet monolayer element or the layers of the backsheet multilayer element of the photovoltaic module of the invention is/are free from fluoride containing polymer.

As an example, the thickness of the mono- or multilayer element of the PV module of the invention, preferably of the backsheet mono- or multilayer element of the invention, is preferably 0.1 to 2.0 mm, preferably 0.15 to 2.0, mm.

Moreover, as an example only, the thickness of the at least one layer of the layer element can be 10.0 to 400 $\mu$m.

The above photovoltaic module may have further layer element(s) in addition to above mentioned elements. Moreover, the layers of said layer elements may be multilayer elements and comprise also adhesive layers for improving the adhesion of the layers of the multilayer element. There can be adhesive layers also between the different layer elements.

The optional glass sheets as the protective front layer element, the photovoltaic layer element, which is preferably element(s) of photovoltaic cells together with connectors, and materials for layers for the front and rear encapsulation element(s) and/or for the backsheet element, when comprising other components than the polymer composition of the invention, are e.g. well-known in the photovoltaic module field and are commercially available or can be produced according to or in accordance with the methods known in the literature for the photovoltaic module field.

The photovoltaic module of the invention can be produced in a manner well known in the field of the photovoltaic modules. The polymeric layer(s) of the different elements can be produced e.g. by lamination or by extrusion, or by combination of lamination and extrusion, in a conventional manner using the conventional extruder and/or lamination equipment, as well-known for a skilled person.

The different elements of the photovoltaic module are typically assembled together by conventional means to produce the final photovoltaic module. Elements can be provided separately or partly in integrated form to such assembly step. The different elements are then typically attached together by lamination using the conventional lamination techniques in the field, as well-known for a skilled person.

The assembly of photovoltaic module is well-known in the field of photovoltaic modules.

Figure 1 is a schematic picture of a typical PV module of the invention comprising a protective front layer element (1), a front encapsulation layer element (2), a photovoltaic layer element (3), a rear encapsulation layer element (4) and a backsheet layer element (5), wherein the backsheet layer element comprises the layer element of the invention as defined above or in below claims.

**Determination Methods**

Melt Flow Rate: The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is measured at a temperature 230 °C and a load of 2.16 kg. The $MFR_2$ of polyethylene is measured at a temperature 190 °C and a load of 2.16 kg

Density: ISO 1183, measured on compression moulded plaques

Comonomer content: The comonomer content was determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of between 100-500 micrometer and spectra recorded in transmission mode.

Specifically, the ethylene content of a polypropylene-co-ethylene copolymer is determined using the baseline corrected peak area of the quantitative bands found at 720-722 and 730-733 cm$^{-1}$. Specifically, the butene or hexene content of a polypropylene copolymer is determined using the baseline corrected peak area of the quantitative bands found at 1377-1379 cm$^{-1}$. Quantitative results are obtained based upon reference to the film thickness.

The comonomer content is herein assumed to follow the mixing rule (equation 2):

$$C_b = w_1 \cdot C_1 + w_2 \cdot C_2 \quad (eq.\,2)$$

Where C is the content of comonomer in weight-%, w is the weight fraction of the component in the mixture and subscripts b, 1 and 2 refer to the overall mixture, component 1 and component 2, respectively.

As it is well known to the person skilled in the art the comonomer content in weight basis in a binary copolymer can be converted to the comonomer content in mole basis by using the following equation

$$c_m = \frac{1}{1 + \left(\frac{1}{c_w} - 1\right) \cdot \frac{MW_c}{MW_m}} \quad (eq.\,3)$$

where $c_m$ is the mole fraction of comonomer units in the copolymer, $c_w$ is the weight fraction of comonomer units in the copolymer, $MW_c$ is the molecular weight of the comonomer (such as ethylene) and $MW_m$ is the molecular weight of the main monomer (i.e., propylene).

Melting temperature ($T_m$) and heat of fusion ($H_f$): cooling) in the temperature range of +23 to +210°C. The melting temperature and heat of fusion ($H_f$) are determined from the second heating step. The melting temperatures were taken as the peaks of endotherms.

Flexural Modulus: The flexural modulus was determined according to ISO 178. The test specimens having a dimension of 80 x 10 x 4.0 mm$^3$ (length x width x thickness) were prepared by injection molding according to EN ISO 1873-2. The length of the span between the supports was 64 mm, the test speed was 2 mm/min and the force was 100 N.

Moisture intake measured according to Karl-Fischer for injection moulded specimens

The same samples as for flexural modulus testing (80 x 10 x 4 mm$^3$) were used to determine the moisture intake. The specimens were stored in water bath (23°C) for 24h and 7 days. Afterwards specimens were dried with water absorbing tissue paper. Moisture content measured with conventional instrumentation, herein supplied by METROHM according to Karl-Fischer Coulometric titration method (ISO 15512, method B). This method is based on the reduction of iodine by sulfur dioxide in the presence of water to form sulfur trioxide and hydroiodic acid. Samples (0.5 - 1 g +/- 1mg.) are cut out and weighed into a vial and closed with a septum cap. The vial is set into the oven and heated up (240°C). The water content is set free and transferred via dry Nitrogen into a measuring cell. Measuring time was 10min. Xylene cold soluble (XCS): The amount of xylene cold soluble fraction was determined according to ISO 16152. The amount of polymer which remains dissolved at 25 °C after cooling is given as the amount of xylene soluble polymer. The content of xylene soluble polymer is herein assumed to follow the mixing rule (equation 4):

$$XS_b = w_1 \cdot XS_1 + w_2 \cdot XS_2 \quad (eq.\,4)$$

Where XCS is the content of xylene soluble polymer in weight-%, w is the weight fraction of the component in the mixture and subscripts b, 1 and 2 refer to the overall mixture, component 1 and component 2, respectively.

Vicat softening temperature: measured according to ASTM D 1525 method A (50°C/h, 10N).

Heat Deflection Temperature (HDT): was measured according to ISO 75-2. The test specimens having a dimension of 80 x 10 x 4.0 mm$^3$ (length x width x thickness) were prepared by injection molding according to EN ISO 1873-2. The test specimen is loaded in three-point bending in the flatwise direction (support span: 64 mm). The outer fiber stress used for testing is 1.80 MPa (Method A). The Temperature is raised with constant heating rate of 120 K/h. The HDT is the temperature at which the bending of the test-specimen reaches a flexural strain increase of 0.2%.

Tensile Modulus; Tensile stress at yield and Tensile strain at break:

**Monolayer film samples:** are prepared as prepared below under "Film preparation" specified below and measured according to ISO 527-3 using the below given conditions.

**Monolayer Film preparation:** 200 or 250 $\mu$m cast films were prepared, as identified in the context, on a Plastic Maschinenbau extruder with 3 heating zones equipped with a PP screw with a diameter of 30 mm, a 200 mm die with a die gap of 0.5 mm. The melt temperature of 250°C and a chill roll temperature of 40°C were used

**Film samples** (200 or 250 $\mu$m monolayer as identified in the context): Before the first test, the film sample must be stored at 23°C /50% RH over a period of 96 hours. The test specimen shall be cut with a film cutter so that the edges are smooth, free from notches and have an exact width. The form of test specimen is a strip 15 mm wide and not less than 150 mm long. The specimens were cut in machine direction (MD).

**Test conditions film tensile test:** The test is performed according to ISO 527-3 using the following test condition set:

Test conditions: 23°C / 50% RH
Preload: app. 0,2N
Speed of preload: 2mm/min
Speed of E-Modulus: 1mm/min
Speed of testing: 200mm/min
Clamping distance: 100mm
Start of E-Modulus testing: 0,05%
End of E-Modulus testing: 0,25%.

UL 94 thin material vertical burning test

The above mentioned 200 and 250$\mu$m films were tested according to UL94 test, chapter 11. 200 x 50 mm specimens were rolled to tubular and conical form (around a 13mm diameter mandrel) according to the testing procedure. 5 samples each were tested, and 3 seconds flame was applied 2 times on each sample. Afterflame times were recoded, as well as, whether the specimens burn up to 125mm mark. Also dripping behavior and especially the presence of burning particles igniting cotton indicator was rated. Samples were classified VTM-0, VTM-2 and fail as described in the standard.

UL94 vertical burning test for thin specimens after water bath:

Same testing procedure as above was applied to film specimens which were first stored in water bath (23°C) for 1 week. Afterwards films were carefully dried (24h) at room temperature before the UL94 testing was performed.

**Experimental Part**

Polymerisation process of the components heterophasic copolymer of propylene (A) (referred below as iPP (A) below examples of tables).

**Catalyst preparation:**

Catalyst preparation for iPP (A) component:

First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of diethylhexylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP 491 566, EP 591 224 and EP 586 390.

Then triethylaluminium (TEAL), dicyclopentyldimethoxysilane (DCPDMS) as donor (Do), catalyst as produced above and vinylcyclohexane (VCH) were added into oil, like mineral oil, e.g. Technol 68 (kinematic viscosity at 40 °C 62-74 cSt), in amounts so that Al/Ti was 3-4 mol/mol, Al/Do was as well 3-4 mol/mol, and weight ratio of VCH/solid catalyst was 1:1. The mixture was heated to 60 - 65 °C and allowed to react until the content of the unreacted vinylcyclohexane in the reaction mixture was less than 1000 ppm. Catalyst concentration in the final oil-catalyst slurry was 10 - 20 wt%.

**Polymerisation Examples**

All Pilot scale polymers were produced with a prepolymerisation reactor, one slurry loop reactor and two gas phase reactors.

Catalyst Feeding

Catalyst was fed continuously to the polymerisation in oil slurry by the piston pump.

*Co-catalyst and Donor*

Triethylaluminium (TEAL) was used as a co-catalyst and dicyclopentyldimethoxysilane (Donor D) was used as an external donor. Actual TEAL and donor feeds are given in table 1.

Prepolymerisation Reactor

The catalyst was flushed with propylene to the prepolymerisation reactor in which also TEAL and D-donor were fed. Prepolymerisation reactor, CSTR was operated at 30°C and 55 barg pressure. The residence time of the particles in propylene slurry was about 0,38 h.

Loop Reactor

The prepolymerised catalyst component was used in loop reactor and gas phase reactors (GPR) connected in series. The process conditions for the loop reactor are given in table 1.

Gas Phase Reactor 1

Polymer slurry was fed from loop to the gas phase reactor (GPR1) as a direct feed without flash. GPR operating temperatures and pressures are given in table 1.

Gas Phase Reactor 2

The product was transferred from GPR1 to GPR2 as an indirect feed via a flash tank. GPR operating temperatures and pressures are given in table 1.

Product Control

The production split between loop and GPR was controlled to be close to 50/50%. The MFR (2,16 kg / 230°C) was controlled by hydrogen feed.

Final iPP (A) component

The polymer powder obtained from GPR2 was further melt homogenised and pelletized using a Coperion ZSK57 co-rotating twin screw extruder with screw diameter 57 mm and L/D 22. Screw speed was 200 rpm and barrel temperature 200-220 °C.

For iPP (A), the following additives were added during the melt homogenisation step: 1500 ppm ADK-STAB A-612 (supplied by Adeka Corporation) and 300 ppm Synthetic hydrotalcite (ADK STAB HT supplied by Adeka Corporation).

Table 1: Polymerisation conditions

| | iPP (A) |
|---|---|
| TEAL/Ti [mol/mol] | 78 |
| TEAL/Donor [mol/mol] | 12 |
| TEAL/ C3 [g/t] | 180 |
| Donor/C3 [g/t] | 30 |
| **Prepolymerisation** | |
| B1 Temperature [°C] | 30 |
| Loop | |
| B2 Temperature [°C] | 85 |
| B2 Pressure (barg) | 55 |
| B2 H2/C3 ratio [mol/kmol] | 1.4 |
| B2 Split [%] | 43.7 |
| **GPR1** | |
| B3 Temperature [°C] | 85 |
| B3 Pressure (barg) | 23 |
| B3 H2/C3 ratio (mol/kmol) | 17 |
| B3 split [%] | 43.7 |
| **GPR2** | |
| B4 Temperature (°C) | 71 |
| B4 Pressure (barg) | 17 |
| B4 C2/C3 ratio [mol/kmol] | 480 |
| B4 H2/C2 ratio [mol/kmol] | 460 |
| B4 split [%] | 12.6 |
| **Final product** | |
| $MFR_2$ [g/10 min] | 3 |
| Ethene comonomer content [wt.%] | 3.6 |
| XCS [wt.%] | 14 |
| Melting temp., Tm [°C] | 165 |
| Vicat A [°C] | 154 |
| Density [kg/m$^3$] | 905 |
| Flexural modulus | 1400 |

Further components of the inventive and comparative PP polymer compositions:

Plastomer 1: Queo 8230, supplier Borealis, is an ethylene based octene plastomer, produced in a solution polymerisation process using a metallocene catalyst, $MFR_2$ (190°C) of 30 g/10 min and density of 882 kg/m$^3$.
FR1: Phoslite B404AF, supplied by Italmatch Chemicals (inorganic phosphor based FR of the invention)
FR2: MAGNIFIN H 5 HV, supplier Albemarle (magnesium hydroxide based FR)
FR3: Flamestab NOR 116, supplied by BASF (Cas: 191680-81-6, 1,3-Propanediamine,N1,N1'-1,2-ethanediylbis-, reaction products with cyclohexane and peroxidizedN-butyl-2,2,6,6-tetramethyl-4-piperidinamine-2,4,6-trichloro-1,3,5-triazinereaction products)

Filler: a commercial talc product
Pigment: a commercially available $TiO_2$ product

Preparation of the inventive and comparative PP polymer compositions. The compositions were prepared by compounding the polymers with the other components and conventional additives on a co-rotating twin-screw extruder (ZSK32, Coperion) using a screw speed of 400 rpm and a throughput of 90-100 kg/h. The melt temperature ranged from 190-220°C. The components and the amounts thereof are given below under table 2.

The reference comparative compositions CE1 to CE3 are identified in table 2 below.

Table 2: Inventive PP polymer compositions IE1 to IE3 and comparative PP compositions CE1 to CE3

| Composition: | unit | CE1 | CE2 | CE3 | IE1 | IE2 | IE3 |
|---|---|---|---|---|---|---|---|
| iPP (A) | wt.-% | 100 | 54 | 98 | 94 | 87 | 45 |
| Plastomer 1 | wt.-% | | | | | 7 | |
| FR2 | wt.-% | | 35 | | | | |
| FR3 | wt.-% | | 1 | 2 | | | |
| Filler | wt.-% | | 10 | | | | |
| FR1 | wt.-% | | | | 6 | 6 | 10 |
| Pigment | wt.-% | | | | | | 45 |
| **Data for IM specimen:** | | | | | | | |
| Water intake 24h | ppm | 244 | 618 | 207 | 398 | 397 | n.m. |
| Water intake 7d | ppm | 289 | 699 | 298 | 535 | 488 | n.m. |
| HDT (B, 0.45 MPa) | °C | 94.2 | | | 94.3 | 87.7 | |
| Vicat (A50) | °C | 153.8 | | | 153.7 | 147.8 | |
| **Data for films:** | | | | | | | |
| Film thickness | μm | 200 | 250 | 250 | 200 | 200 | 200 |
| Tensile Modulus MD | MPa | 1211 | 2919 | 1053 | 1230 | 1097 | 1631 |
| Tensile strength MD | MPa | 29 | 23 | 45 | 28 | 33 | 24 |
| Tensile strain at break MD | % | 657 | 327 | 897 | 614 | 895 | 596 |
| UL-94 | -- | fail | fail | ~VTM-2 | VTM-0 | VTM-0 | VTM-0 |
| UL-94 (after 7d water bath) | -- | n.m. | n.m. | n.m. | VTM-0 | VTM-0 | n.m. |
| n.m. not measured | | | | | | | |

UL-94 test result VTM-2 of CE3 is borderline already as some samples did burn through. IE1 and IE3 are not in accordance with the invention.

**PV-module example**

Protective front glass element, front EVA-encapsulation layer element, photovoltaic cell element together with connectors, rear EVA-encapsulation layer element and monolayer backsheet of the invention of IE3 were assembled in a conventional laminator, heated under vacuum, and then pressed to a PV module in a conventional manner using conventional conditions.

The front glass material, photovoltaic cell element and EVA material of front and rear encapsulation (same EVA in both layer elements) were those conventionally used in the PV field.

**Claims**

1. A polypropylene composition comprising

(i) more than 30 wt% of a polymer of propylene (PP),
(ii) 1 to 20 wt% of a flame retardant product comprising an inorganic derivative of Phosphor,
(iii) 0.2 to 5 wt% of an additive(s) other than the flame retardant product (ii), and
(iv) 3 to 30 wt% of a plastomer being a copolymer of ethylene with at least one C3 to C10 alpha-olefin and optionally
(v) 0 to 45 wt% further component(s) other than (i) to (iv);

based on the total amount (100 wt%) of the polypropylene composition.

2. The polypropylene composition according to claim 1, wherein the polymer of propylene (PP) (i) is a copolymer of propylene.

3. The polypropylene composition according to any of the preceding claims, wherein the polymer of propylene (PP) is a heterophasic copolymer of propylene (iPP) which comprises a heterophasic copolymer of propylene (A) which comprises a polypropylene matrix component (a1) and

an elastomeric propylene copolymer component (a2) which is dispersed in said polypropylene matrix (a1); and wherein the heterophasic copolymer of propylene (A) has a Melting temperature (Tm) (DSC) of at least 145°C, when measured by DSC according to ISO 3146 / part 3 / method C2; and a Vicat softening temperature (Vicat A) of at least 90°C, (according to ASTM D 1525, method A, 50°C/h, 10N).

4. The polypropylene composition according to any of the preceding claims, wherein the heterophasic copolymer of propylene (A) has the following properties:

- MFR2 of 0.2 to 20 g/10 min when measured according to ISO 1133 (at 230°C and 2.16 kg load),
- Xylene cold soluble (XCS) fraction in amount of 3 to 30, when measured according to ISO 16152 at 25°C,
- Comonomer content of 0.5 to 20 wt%, when measured by quantitative FTIR after basic assignment calibrated via quantitative $^{13}$C-NMR,
- Flexural modulus of at least 900 MPa, when measured according to ISO178 on test specimens prepared by injection moulding according to EN ISO 1873-2, and
- Density of 900 to 910 kg/m3, when measured according to ISO 1183 on compression moulded plaques.

5. The polypropylene composition according to any of the preceding claims which comprises

(i) 40 to 98.5 wt% of a polymer of propylene (PP),
(ii) 2 to 15 wt% of a flame retardant product comprising an inorganic derivative of Phosphor,
(iii) 0.3 to 4.5 wt% of an additive(s) other than the flame retardant product (ii),
(iv) 3 to 20 wt% of a plastomer being a copolymer of ethylene with at least one C3 to C10 alpha-olefin, and optionally
(v) 0 to 45 wt% further component(s) other than (i) to (iv);

based on the total amount (100 wt%) of the polymer composition.

6. The polypropylene composition according to any of the preceding claims, wherein the inorganic derivative of Phosphor of the flame retardant product (ii) is an inorganic Phosphinic acid derivative.

7. An article comprising the polypropylene composition according to any of the preceding claims 1-6.

8. The article according to claim 7 comprising a layer element, wherein said layer element comprises at least one layer comprising said polypropylene composition.

9. The article according to claim 7 or 8, which is a photovoltaic module comprising a layer element which is selected from

- a monolayer element comprising said polypropylene composition, and
- a multilayer element wherein at least one layer comprises said polypropylene composition.

10. The article according to any of the preceding claims 7 to 9, which is a layer element, which comprises at least one layer which comprises said polypropylene composition.

11. The article according to claim 10, wherein the layer element is selected from

- a monolayer film comprising said polypropylene composition, and
- a multilayer film wherein at least one layer comprises said polypropylene composition.

12. The article according to claim 10 which is a layer element of a photovoltaic module, which layer element is selected from

- a monolayer element comprising said polypropylene composition, and
- a multilayer element wherein at least one layer comprises said polypropylene composition.

13. The article according to any of the preceding claims 7 to 9, which is a photovoltaic module, which comprises at least one photovoltaic element and at least one layer element according to any of the preceding claims 10 or 12 comprising at least one layer comprising said polypropylene composition.

14. The article according to claim 13 comprising, in the given order, a protective top layer element, a front encapsulation layer element, at least one photovoltaic layer element, a rear encapsulation layer element, a backsheet layer element and optionally a protective cover, wherein at least one of said layer elements comprises at least one layer comprising said polypropylene composition.

15. The article according to claim 14, which is the backsheet layer element of a photovoltaic module, which is a layer element according to any of the preceding claims 10 or 12 and which is selected from

- a backsheet monolayer element comprising said polypropylene composition, and
- a backsheet multilayer element wherein at least one layer comprises said polypropylene composition.

16. Use of an inorganic derivative of Phosphor as a flame retarding agent for a polypropylene composition according to any of the preceding claims 1-6.

**Patentansprüche**

1. Eine Polypropylenzusammensetzung, umfassend

(i) mehr als 30 Gew.-% eines Polymers von Propylen (PP),
(ii) 1 bis 20 Gew.-% eines flammhemmenden Produkts, das ein anorganisches Phosphorderivat enthält
(iii) 0,2 bis 5 Gew.-% eines oder mehrerer anderer Zusatzstoffe als das flammhemmende Produkt (ii) und
(iv) 3 bis 30 Gew.-% eines Plastomers, bei dem es sich um ein Copolymer von Ethylen mit mindestens einem C3 bis C10 Alpha-Olefin handelt, und gegebenenfalls
(v) 0 bis 45 Gew.-% weitere(r) Bestandteil(e), die nicht unter (i) bis (iv) fallen;

bezogen auf die Gesamtmenge (100 Gew.-%) der Polypropylenzusammensetzung.

2. Polypropylenzusammensetzung nach Anspruch 1, wobei das Polymer von Propylen (PP) (i) ein Copolymer von Propylen ist.

3. Polypropylenzusammensetzung nach einem der vorhergehenden Ansprüche, wobei das Polymer von Propylen (PP) ein heterophasisches Copolymer von Propylen (iPP) ist, das ein heterophasisches Copolymer von Propylen (A) umfasst, das eine Polypropylenmatrixkomponente (a1) und

eine elastomere Propylen-Copolymer-Komponente (a2), die in der Polypropylenmatrix (a1) dispergiert ist; und wobei das heterophasische Copolymer von Propylen (A) eine Schmelztemperatur (Tm) (DSC) von mindestens 145°C, gemessen durch DSC gemäß ISO 3146 / Teil 3 / Methode C2, und eine Vicat-Erweichungstemperatur (Vicat A) von mindestens 90°C (gemäß ASTM D 1525, Methode A, 50°C/h, 10N) aufweist.

4. Polypropylenzusammensetzung nach einem der vorhergehenden Ansprüche, wobei das heterophasische Copolymer von Propylen (A) die folgenden Eigenschaften aufweist:

- MFR2 von 0,2 bis 20 g/10 min, gemessen nach ISO 1133 (bei 230°C und 2,16 kg Last),
- Xylol kalt lösliche (XCS) Fraktion in einer Menge von 3 bis 30, gemessen nach ISO 16152 bei 25°C,
- Comonomer-Gehalt von 0,5 bis 20 Gew.-%, gemessen mit quantitativem FTIR nach Basiszuweisung, kalibriert über quantitative $^{13}$C-NMR,
- Biegemodul von mindestens 900 MPa, gemessen nach ISO178 an Probekörpern, die durch Spritzgießen nach EN ISO 1873-2 hergestellt wurden, und
- Dichte von 900 bis 910 kg/m3, gemessen nach ISO 1183 an formgepressten Platten.

5. Polypropylenzusammensetzung nach einem der vorangehenden Ansprüche, umfassend

(i) 40 bis 98,5 Gew.-% eines Polymers von Propylen (PP),
(ii) 2 bis 15 Gew.-% eines flammhemmenden Produkts, das ein anorganisches Phosphorderivat enthält,
(iii) 0,3 bis 4,5 Gew.-% eines oder mehrerer anderer Zusatzstoffe als das flammhemmende Produkt (ii),
(iv) 3 bis 20 Gew.-% eines Plastomers, das ein Copolymer von Ethylen mit mindestens einem C3 bis C10 Alpha-Olefin ist, und gegebenenfalls
(v) 0 bis 45 Gew.-% weitere(r) Komponente(n), die nicht unter (i) bis (iv) fallen;

bezogen auf die Gesamtmenge (100 Gew.-%) der Polymerzusammensetzung.

6. Polypropylenzusammensetzung nach einem der vorhergehenden Ansprüche, wobei das anorganische Phosphorderivat des flammhemmenden Produkts (ii) ein anorganisches Phosphinsäurederivat ist.

7. Ein Gegenstand, der die Polypropylenzusammensetzung nach einem der vorangehenden Ansprüche 1 bis 6 enthält.

8. Gegenstand nach Anspruch 7, umfassend ein Schichtelement, wobei das Schichtelement mindestens eine Schicht umfasst, die die Polypropylenzusammensetzung enthält.

9. Gegenstand nach Anspruch 7 oder 8, der ein photovoltaisches Modul ist, das ein Schichtelement umfasst, das ausgewählt ist aus

- einem einschichtigen Element, das die Polypropylenzusammensetzung enthält, und
- einem mehrschichtigen Element, wobei mindestens eine Schicht die Polypropylenzusammensetzung enthält.

10. Gegenstand nach einem der vorhergehenden Ansprüche 7 bis 9, der ein Schichtelement ist, das mindestens eine Schicht umfasst, die die Polypropylenzusammensetzung enthält.

11. Gegenstand nach Anspruch 10, wobei das Schichtelement ausgewählt ist aus

- einer einschichtigen Folie, die die Polypropylenzusammensetzung enthält, und
- einer mehrschichtigen Folie, wobei mindestens eine Schicht die Polypropylenzusammensetzung enthält.

12. Gegenstand nach Anspruch 10, der ein Schichtelement eines photovoltaischen Moduls ist, wobei das Schichtelement ausgewählt ist aus

- einem einschichtigen Element, das die Polypropylenzusammensetzung enthält, und
- einem mehrschichtigen Element, wobei mindestens eine Schicht die Polypropylenzusammensetzung enthält.

13. Gegenstand nach einem der vorhergehenden Ansprüche 7 bis 9, der ein photovoltaisches Modul ist, das mindestens ein photovoltaisches Element und mindestens ein Schichtelement nach einem der vorhergehenden Ansprüche 10 oder 12 umfasst, das mindestens eine Schicht umfasst, die die Polypropylenzusammensetzung enthält.

14. Gegenstand nach Anspruch 13, der in der angegebenen Reihenfolge ein oberes Schutzschichtelement, ein vorderes Verkapselungsschichtelement, mindestens ein photovoltaisches Schichtelement, ein hinteres Verkapselungsschichtelement, ein Rückseitenschichtelement und gegebenenfalls eine Schutzabdeckung umfasst, wobei mindestens eines der Schichtelemente mindestens eine Schicht umfasst, die die Polypropylenzusammensetzung enthält.

15. Gegenstand nach Anspruch 14, der das Rückseitenschichtelement eines photovoltaischen Moduls ist, das ein Schichtelement nach einem der vorhergehenden Ansprüche 10 oder 12 ist und das ausgewählt ist aus

- einem einschichtigen Rückseitenschichtelement, das die Polypropylenzusammensetzung enthält, und
- einem mehrschichtigen Rückseitenschichtelement, wobei mindestens eine Schicht die Polypropylenzusammensetzung enthält.

**16.** Verwendung eines anorganischen Derivats von Phosphor als Flammschutzmittel für eine Polypropylenzusammensetzung nach einem der vorhergehenden Ansprüche 1-6.

**Revendications**

**1.** Composition de polypropylène comprenant

(i) plus de 30 % en poids d'un polymère de propylène (PP),
(ii) 1 à 20 % en poids d'un produit ignifuge comprenant un dérivé inorganique de phosphore,
(iii) 0,2 à 5 % en poids d'un ou plusieurs additifs autres que le produit ignifuge (ii), et
(iv) 3 à 30 % en poids d'un plastomère étant un copolymère d'éthylène avec au moins une alpha-oléfine en C3 à C10 et optionnellement
(v) 0 à 45 % en poids d'un ou de plusieurs composants supplémentaires autres que (i) à (iv) ;

sur la base de la quantité totale (100 % en poids) de la composition de polypropylène.

**2.** Composition de polypropylène selon la revendication 1, dans laquelle le polymère de propylène (PP) (i) est un copolymère de propylène.

**3.** Composition de polypropylène selon l'une des revendications précédentes, dans laquelle le polymère de propylène (PP) est un copolymère hétérophasique de propylène (iPP) qui comprend un copolymère hétérophasique de propylène (A) qui comprend un composant de matrice de polypropylène (a1) et

un composant copolymère élastomère de propylène (a2) qui est dispersé dans ladite matrice de polypropylène (a1) ;
et dans laquelle le copolymère hétérophasique de propylène (A) présente une température de fusion (Tm) (DSC) d'au moins 145 °C, lorsqu'elle est mesurée par DSC selon la norme ISO 3146/partie 3/procédé C2 ; et une température de ramollissement Vicat (Vicat A) d'au moins 90 °C, (selon la norme ASTM D 1525, procédé A, 50 °C/h, 10 N).

**4.** Composition de polypropylène selon l'une des revendications précédentes, dans laquelle le copolymère hétérophasique de propylène (A) présente les propriétés suivantes :

- un MFR2 de 0,2 à 20 g/10 min, lorsqu'il est mesuré selon la norme ISO 1133 (à 230 °C et 2,16 kg de charge),
- une fraction soluble à froid dans le xylène (XCS) en une quantité de 3 à 30, lorsqu'elle est mesurée selon la norme ISO 16152 à 25 °C,
- une teneur en comonomères de 0,5 à 20 % en poids, lorsqu'elle est mesurée par IRTF quantitative après fréquence assignée à titre primaire étalonnée par RMN du $^{13}$C quantitative,
- un module d'élasticité en flexion d'au moins 900 MPa, lorsqu'il est mesuré selon la norme ISO 178 sur des éprouvettes préparées par moulage par injection selon la norme EN ISO 1873-2, et
- une masse volumique de 900 à 910 kg/m3, lorsqu'elle est mesurée selon la norme ISO 1183 sur des plaques moulées par compression.

**5.** Composition de polypropylène selon l'une des revendications précédentes qui comprend

(i) 40 à 98,5 % en poids d'un polymère de propylène (PP),
(ii) 2 à 15 % en poids d'un produit ignifuge comprenant un dérivé inorganique de phosphore,
(iii) 0,3 à 4,5 % en poids d'un ou plusieurs additifs autres que le produit ignifuge (ii),
(iv) 3 à 20 % en poids d'un plastomère étant un copolymère d'éthylène avec au moins une alpha-oléfine en C3 à C10, et optionnellement
(v) 0 à 45 % en poids d'un ou de plusieurs composants supplémentaires autres que (i) à (iv) ;

sur la base de la quantité totale (100 % en poids) de la composition polymère.

**6.** Composition de polypropylène selon l'une des revendications précédentes, dans laquelle le dérivé inorganique de phosphore du produit ignifuge (ii) est un dérivé inorganique de l'acide phosphinique.

**7.** Article comprenant la composition de polypropylène selon l'une des revendications 1 à 6 précédentes.

**8.** Article selon la revendication 7 comprenant un élément de couche, dans lequel ledit élément de couche comprend au moins une couche comprenant ladite composition de polypropylène.

**9.** Article selon la revendication 7 ou 8, qui est un module photovoltaïque comprenant un élément de couche qui est sélectionné parmi

- un élément monocouche comprenant ladite composition de polypropylène, et
- un élément multicouche dans lequel au moins une couche comprend ladite composition de polypropylène.

**10.** Article selon l'une des revendications 7 à 9 précédentes, qui est un élément de couche, qui comprend au moins une couche qui comprend ladite composition de polypropylène.

**11.** Article selon la revendication 10, dans lequel l'élément de couche est sélectionné parmi

- un film monocouche comprenant ladite composition de polypropylène, et
- un film multicouche dans lequel au moins une couche comprend ladite composition de polypropylène.

**12.** Article selon la revendication 10 qui est un élément de couche d'un module photovoltaïque, lequel élément de couche est sélectionné parmi

- un élément monocouche comprenant ladite composition de polypropylène, et
- un élément multicouche dans lequel au moins une couche comprend ladite composition de polypropylène.

**13.** Article selon l'une des revendications 7 à 9 précédentes, qui est un module photovoltaïque, qui comprend au moins un élément photovoltaïque et au moins un élément de couche selon l'une des revendications 10 ou 12 précédentes comprenant au moins une couche comprenant ladite composition de polypropylène.

**14.** Article selon la revendication 13 comprenant, dans l'ordre donné, un élément de couche supérieure protectrice, un élément de couche d'encapsulation avant, au moins un élément de couche photovoltaïque, un élément de couche d'encapsulation arrière, un élément de couche de feuille arrière et optionnellement un revêtement de protection, dans lequel au moins l'un desdits éléments de couche comprend au moins une couche comprenant ladite composition de polypropylène.

**15.** Article selon la revendication 14, qui est l'élément de couche de feuille arrière d'un module photovoltaïque, qui est un élément de couche selon l'une des revendications 10 ou 12 précédentes et qui est sélectionné parmi

- un élément monocouche de feuille arrière comprenant ladite composition de polypropylène, et
- un élément multicouche de feuille arrière dans lequel au moins une couche comprend ladite composition de polypropylène.

**16.** Utilisation d'un dérivé inorganique de phosphore comme agent ignifugeant pour une composition de polypropylène selon l'une des revendications 1 à 6 précédentes.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012030578 A, ExxonMobil
- WO 2007010318 A1
- JP 2014139001 A, TOYO METALLISING KK
- WO 2014205802 A
- WO 2011079457 A1
- EP 0887379 A
- WO 9212182 A
- WO 2004000899 A
- WO 2004111095 A
- WO 9924478 A
- WO 9924479 A
- WO 0068315 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 2012007430 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- EP 491566 A
- EP 591224 A
- EP 586390 A

### Non-patent literature cited in the description

- *CHEMICAL ABSTRACTS*, 191680-81-6
- **S. ZHANG** ; **A. R. HORROCKS**. A review of flame retardant polypropylene fibres. *Prog. Polym. Sci*, 2003, vol. 28, 1517-1538